(19) Europäisches Patentamt

European Patent Office

Office européen des brevets

(11) Veröffentlichungsnummer: **0 268 884 B1**

(12) **EUROPÄISCHE PATENTSCHRIFT**

(45) Veröffentlichungstag der Patentschrift: **20.03.91**

(51) Int. Cl.⁵: **F16B 17/00**

(21) Anmeldenummer: **87116217.8**

(22) Anmeldetag: **04.11.87**

(54) **Verbindung von zwei Profilteilen.**

(30) Priorität: **07.11.86 DE 3638048**

(43) Veröffentlichungstag der Anmeldung:
**01.06.88 Patentblatt 88/22**

(45) Bekanntmachung des Hinweises auf die
Patenterteilung:
**20.03.91 Patentblatt 91/12**

(84) Benannte Vertragsstaaten:
**AT CH FR GB IT LI SE**

(56) Entgegenhaltungen:
**EP-A- 0 154 574**
**DE-A- 3 317 343**
**DE-U- 1 907 242**
**DE-U- 1 922 271**
**DE-U- 8 002 922**

(73) Patentinhaber: **Julius & August Erbslöh GmbH
& Co.**
**Siebeneickerstrasse 235**
**W-5620 Velbert 15 (Neviges)(DE)**

(72) Erfinder: **Pühringer, Siegfried**
**Veilchenstrasse 5**
**W-5600 Wuppertal 2(DE)**

## Beschreibung

Die Erlindung betrifft eine Verbindung von zwei Profilteilen, Insbesondere aus Aluminium und dessen Legierungen, zu Platten, Tafeln, Pfosten, Streben, Einfassungen, Abstützungen und dergleichen, wobei ein Profilteil eine Nut zur Aufnahme einer Feder eines anderen Profilteiles aufweist und die Nut an ihrem Grund verbreitert ist.

Nut- und Federverbindungen sind zum Aneinanderfügen von Profilteilen seit langem bekannt. So ist aus dem DE-U-1 922 271 eine Steckverbindung bekannt geworden, bei der ebenfalls Nut und Feder zweier Profilteile zusammenwirken. Dabei weisen die Profilteile in gleicher Ebene einander gegenüberliegende Längsnuten auf, wobei in der Nut des einen Profilteiles zwei in einem Abstand voneinander und gleichlaufend zueinander angeordnete, der Elementenlänge entsprechende federnde Wände verankert sind, die an ihren freien Enden mit nach außen gerichteten Verstärkungen versehen sind. Die Nut des einen Profilteiles ist an ihrem geschlossenen Ende hammerkopfförmig ausgebildet. Werden die im einen Profilteil verankerten Wände in die Nut eingeschoben, drücken sie sich dank ihrer Elastizität und der Verdickungen ihrer freien Enden zusammen, bis die Enden in die hammerkopfförmigen Hinterschneidungen am geschlossenen Ende der Nut einrasten können. Funktionsbedingt ist dabei ein das Klappern begünstigendes Spiel unvermeidbar. Aus diesem Grunde sind besondere zusätzliche Sicherungsmittel erforderlich. Die vorbekannte Verbindung setzt außerdem wenigstens bei einem Profilteil eine große Bautiefe voraus, da die Länge der Wandungen ausreichend bemessen sein muß, um überhaupt die Elastizität sicherzustellen. Die Verbindung ist auch nicht unlösbar, denn die Profilteile können in Längsrichtung gegeneinander verschoben und voneinander wieder getrennt werden.

Die Aufgabe der vorliegenden Erfindung besteht darin, für Profilteile eine Verbindung der eingangs genannten Art zu schaffen, die sowohl in ihrer Einschubrichtung als auch in Profiliängsrichtung fest, unlösbar, spielfrei und gesichert ist.

Diese Aufgabe ist erfindungsgemäß dadurch gelöst, daß die Nut (20) des einen Profilteiles (18) in ihrem engen Bereich (21) mit sägezahnartigen Rücksprüngen (23) zur rastenden Halterung der mit sägezahnartigen Vorsprüngen (13) versehenen Feder (11) des anderen Profilteiles (10) versehen ist und die Feder (11)in ihrem unteren Teil in Einschubrichtung geneigte Spreizstege (16) aufweist, die nach Eintreiben der Feder in die Nut bleibend verformt werden und die Nutverbreiterung (22) form- und kraftschlüssig ausfüllen, wobei deren zum Nutgrund vorspringende Stützzungen (17) höhengleich mit der Nutengrundverbreiterung (22) sind und die Hinterschneidung dieser Nutgrundverbreiterung hintergreifen.

Durch den Eintreibvorgang wird ein Formschluß zwischen Nut und Feder hergestellt, wobei in folge der bleibenden Verformung eine solche Reibkraft erzeugt wird, daß eine Verschiebung der Profilteile in deren Längsrichtung gegeneinander im Verbindungszustand ausgeschlossen ist. Zur Einleitung der Verformungsbewegung der Spreizstege zu Beginn der Verformungsphase ist an den freien Enden der Spreizstege vorteilhaft eine zum Nutgrund vorspringende Stützzunge angeordnet. Es ist dabei möglich, die Nut und auch die darin eindringende Feder symmetrisch zu gestalten, wobei es jedoch in manchen Fällen ausreichen mag, die Nut und Feder an einer Seite vollkommen glattflächig auszubilden, während nur die andere Seite der Nut im Bereich des Nutgrundes eine Ausnehmung aufweist und am Kopf der Feder nur ein einseitig vorgeneigter Spreizsteg angeordnet ist.

Die Erfindung ist in einem Ausführungsbeispiel auf der Zeichnung dargestellt und wird nachfolgend näher erläutert. Es zeigen:

- Figur 1 zwei Profilteile im Querschnitt in stark vergrößerter Darstellung, wovon der eine Profilteil eine Aufnahmenut für eine Feder des anderen Profilteiles aufweist und die Profilteile in einer Lage vor Beginn des Einschiebens dargestellt sind,

- Figur 2 die aus Fig. 1 ersichtlichen Profilteile im Querschnitt nach Herstellung ihrer Verbindungslage mittels Nut und Feder.

Der Profilteil 10 weist eine Feder 11 auf, deren Federschaft 12 auf beiden Längsseiten mit sägezahnartigen Vorsprüngen 13 versehen ist. Aus dem Federkopf 14 treten über einen Anschlußhals 15 zu beiden Federlängsseiten und in Einschubrichtung und nach außen hin geneigte Spreizstege 16 aus, die an ihren freien Enden vorspringende Stützzungen 17 aufweisen. Die Höhe der Stützzungen 17 entspricht vorteilhafterweise der Höhe der Nutgrundverbreiterung 22.

Der andere Profilteil 18 weist eine Halteklaue 19 auf, in welche eine Nut 20 ein-getieft ist. Diese Nut 20 weist einen hammerkopfartigen Querschnitt auf, der durch eine Engstelle 21 und eine sich daran anschließende Nutgrundverbreiterung 22 gebildet wird. Die Nutwandungen der Engstelle verlaufen in der Engstelle von außen nach innen etwas geneigt gegeneinander und weisen einen sägezahnartigen Rücksprung 23 auf.

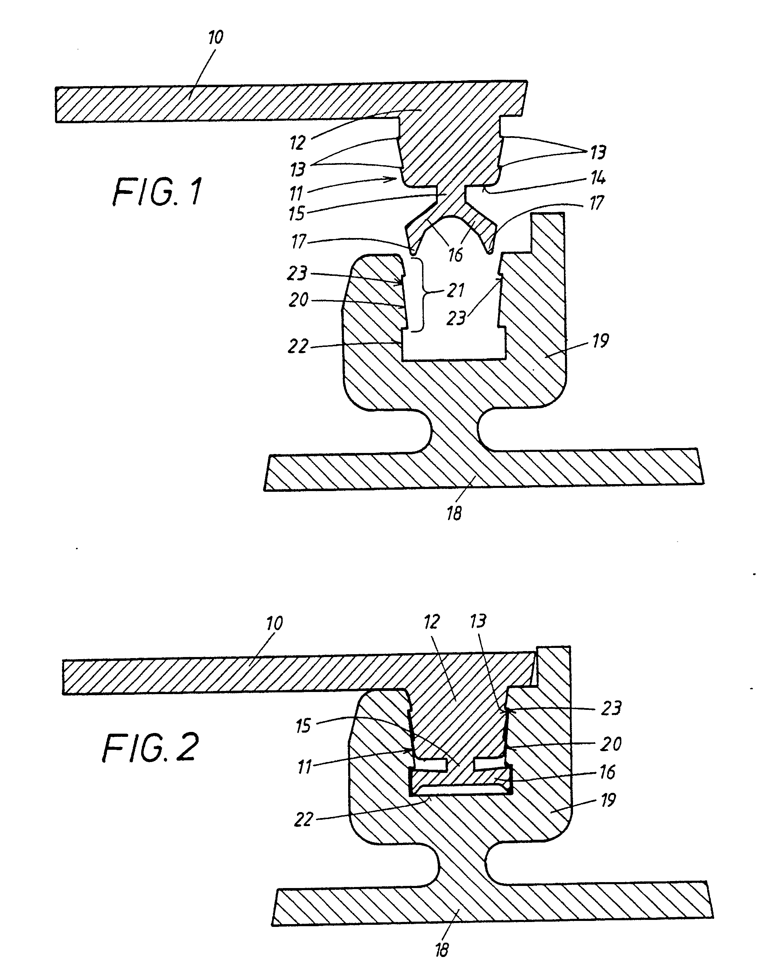

Wenn nun, ausgehend von Fig. 1, die Feder 11 des Profilteiles 10 in die Nut 20 des Profilteiles 18 eingeführt wird, so passieren die Spreizstege 16 zunächst die Engstelle 21 der Nut 20 ungehindert, bis die Stützzungen 17 am Boden der Nut-grundverbreiterung 22 zur Anlage kommen. Durch weiteres Eindrücken der Feder 11 in die Nut 20 werden die Spreizstege 16 über die Stützzungen l7 verformt und greifen am Ende der Eindrückphase in die hammerkopfartige Nutgrundverbreiterung 22 so ein, daß die Stützzungen 17 die Hinterschneidungen der Nutverbreiterung 22 hintergreifen und sich in diesen verklemmen. Gleichzeitig legen sich die Seitenwandungen des Federschaftes 12 in der Engstelle 21 an die Nutseitenwandungen an, wobei die oberen Vorsprünge 13 am Federschaft 12 die Rücksprünge 23 in den Engstellen 21 der Nut 20 hinterfassen. Diese Feste und unlösbare Verbindungslage ist in Fig. 2 dargestellt. Es versteht sich, daß die Profilteile 10 und 18 unterschiedlich gestaltet und auch abweichend von der dargestellten Form ausgebildet sein können. Bei dem dargestellten Ausführungsbeispiel wurden die eigentlichen Profilteile als Flachstücke dargestellt, an die sich jeweils entweder die Feder 11 oder die Nut 20 anschließt. Die Profilteile können jedoch auch in ihrem Querschnitt hohlförmig, C-förmig, U-förmig plattenförmig oder lamellenförmig gestaltet sein.

## Ansprüche

1. Verbindung von zwei Profilteilen, insbesondere aus Aluminium und dessen Legierungen zu Platten, Tafeln, Pfosten, Streben, Einfassungen, Abstützungen und dergleichen, wobei ein Profilteil eine Nut zur Aufnahme der Feder eines anderen Profilteiles aufweist und die Nut an ihrem Grund erweitert ist,
   **dadurch gekennzeichnet,**
   daß die Nut (20) des einen Profilteiles (18) In ihrem engen Bereich (21) mit sägezahnartigen Rücksprüngen (23) zur rastenden Halterung der mit sägezahnartigen Vorsprüngen (13) versehenen Feder (11) des anderen Profilteiles (10) versehen ist und die Feder (11) in ihrem unteren Teil in Einschubrichtung geneigte Spreizstege aufweist, die nach Eintreiben der Feder in die Nut bleibend verformt werden und die Nutverbreiterung (22) form- und kraftschlüssig ausfüllen, wobei deren zum Nutgrund vorspringende Stützzungen (17) höhengleich mit der Nutengrundverbreiterung (22) sind und die Hinterschneidung dieser Nutengrundverbreiterung hintergreifen.

## Claims

1. Connection of two profiled parts, more especially formed from aluminium and its alloys, to form plates, boards, poles, bars, frames, supports and the like, wherein one profiled part has a groove for receiving the tongue of another profiled part, and the groove is widened at its base, characterised in that the groove (20) in one profiled part (18) is provided, in its narrow region (21), with sawtooth-like sockets (23) for the locking retention of the tongue (11) of the other profiled part (10), which tongue is provided with saw-tooth-like spigots (13), and the tongue (11) has, in its lower portion, expanding webs (16), which are inclined in the direction of insertion and are permanently deformed after the tongue has been inserted into the groove, and said webs fill the widened portion (22) of the groove in a form- and force-locking manner, the supporting projections (17) of said webs, which protrude to the base of the groove, being identical in height to the widened portion (22) of the groove base and engaging behind the undercut section of this widened portion of the groove base.

## Revendications

1. Connexion de deux éléments profilés, notamment en aluminium et ses alliages, pour former des plaques, des panneaux, des poteaux, des contre-fiches, des encadrements, des systèmes d'appui et dispositifs analogues, un élément profilé présentant une rainure pour la réception d'une languette de l'autre élément profilé et la rainure étant élargie dans son fond, caractérisée par le fait que la rainure (20) dudit élément profilé (18) est pourvue, dans sa partie étroite (21), de retraits (23) en dents de scie, en vue du maintien par encliquetage de la languette (11), munie de saillies (13) en dents de scie, dudit autre élément profilé (10) et que la languette (11) présente dans sa partie inférieure des ailes à expansion (16) inclinées dans le sens d'introduction, qui sont déformées de façon permanente après l'enfoncement de la languette dans la rainure et remplissent la partie élargie (22) de la rainure par complémentarité de forme et par serrage, leurs parties d'appui (17), en saillie vers le fond de la rainure, ayant la même hauteur que la partie élargie (22) de la rainure et étant engagées derrière la contre-dépouille de cette partie élargie de la rainure.

*FIG. 1*

10

12

13

13

11

15

17

23

20

22

14

17

16

21

23

19

18

*FIG. 2*

10

12

13

15

11

22

23

20

16

19

18